# FASCICULE DE BREVET EUROPEEN

(11) **EP 3 881 178 B1**
(45) Date de publication et mention de la délivrance du brevet: **27.12.2023**
(21) Numéro de dépôt: 19797230.0
(22) Date de dépôt: 29.10.2019
(51) Int. Cl.: G06F 9/451, G06F 16/958

(54) **PROCÉDÉ DE GÉNÉRATION D'UN CONTENU DE MANIÈRE EXTENSIBLE**
VERFAHREN ZUR EXPANDIERBAREN ERZEUGUNG VON INHALTEN
METHOD FOR THE EXPANDABLE GENERATION OF CONTENT

(30) Priorité: 15.11.2018 CH 14162018
(43) Date de publication de la demande: 22.09.2021
(73) Titulaire: Thidima SA, 1651 Sion (CH)
(72) Inventeur: SAR, Somanos, 91600 SAVIGNY-SUR-ORGE (FR)
(74) Mandataire: Germain Maureau
(86) Numéro de dépôt international: PCT/EP2019/079470
(87) Numéro de publication internationale: WO 2020/099118

(56) Documents cités:
- US-A1- 2009 271 365
- BEHR J ET AL: "A scalable architecture for the HTML5/X3D integration model X3DOM", 15TH INTERNATIONAL CONFERENCE ON 3D WEB TECHNOLOGY 2010 : (WEB3D 2010) ; LOS ANGELES, CALIFORNIA, USA, 24 - 25 JULY 2010, CURRAN, RED HOOK, NY, 24 juillet 2010 (2010-07-24), pages 185-194, XP058131643, DOI: 10.1145/1836049.1836077 ISBN: 978-1-4503-0209-8
- SONS KRISTIAN ET AL: "xml3d.js: Architecture of a Polyfill implementation of XML3D", 2013 6TH WORKSHOP ON SOFTWARE ENGINEERING AND ARCHITECTURES FOR REALTIME INTERACTIVE SYSTEMS (SEARIS), IEEE, 17 mars 2013 (2013-03-17), pages 17-24, XP032587415, DOI: 10.1109/SEARIS.2013.6798104 [extrait le 2014-04-14]

## Description

### Domaine de l'invention

Le domaine de la présente invention concerne celui des procédés de communications. Elle concerne particulièrement, mais pas exclusivement, le domaine des technologies des sites web fonctionnant sous les normes et standard du 3WC.

### Art antérieur

De nos jours, certains programmes nécessitent qu'un module externe (en anglais « plugin ») soit installé sur un navigateur internet pour pouvoir traiter un contenu permettant la manipulation de graphiques vectoriels, d'images matricielles et de scripts « ActionScript » en vue de créer des contenus multimédias tels que des animations, vidéos, jeux, applications, entre autres, destinés à être publiés sur Internet.

Toutefois, ces programmes présentent de plus en plus de nombreux problèmes d'interopérabilité ainsi que de sécurité, à cause de cette nécessite même de module externe.

Par ailleurs, le rendu des pages web est réalisé par un serveur distant. Ceci implique pour chaque site web la mise en oeuvre d'une infrastructure qu'il faut ensuite exploiter, sécuriser, maintenir, etc. De plus, cette approche génère un coût significatif pour l'exploitant du site, puisque le temps de calcul de chaque page est imputé au serveur.

De plus, la quasi-totalité des langages, le jeu d'instructions est limité à un ensemble de mots-clefs, ou réservés. Par exemple, dans le HTML, il existe une liste de « balises » reconnues par le navigateur. Les utilisateurs ne peuvent pas ajouter une nouvelle balise répondant à ses propres besoins sans permettre à l'utilisateur d'en étendre le « dictionnaire », c'est-à-dire d'ajouter de nouveaux objets à la bibliothèque de base, disponible dans le moteur de rendu.

Enfin, basé sur le modèle objet de document (en abrégé « DOM »), un navigateur internet ne sait afficher que du contenu décrit par le langage HTML, qui est un langage déclaratif, donc complétement statique. Pour rendre le même contenu plus attrayant, le navigateur utilise également CSS, ce qui permet un habillage très riche et sophistiqué. Mais toujours plus ou moins statique. Le côté dynamique n'est rendu possible que par la présence du Javascript.

Basiquement, pour la raison que le navigateur internet est basé sur le DOM et que celui-ci s'appuie sur du HTML, la génération du HTML est toujours faite du côté serveur. Le navigateur se contente donc de se connecter au serveur pour recevoir du HTML, avant de l'afficher, de la décorer avec du CSS et éventuellement de la rendre plus ou moins dynamique avec du code Javascript. Même dans les architectures les plus modernes avec des contenus très dynamiques, c'est toujours le serveur qui génère les pages, toujours en HTML.

Par conséquent, il convient de trouver une solution qui ne nécessite pas de module externe tout en respectant les normes HTMLS et WebGL implémentées par les éditeurs de navigateurs, sous la forme d'un langage extensible de sorte à étendre les capacités intrinsèques du langage de modélisation de réalité virtuel (en anglais « Virtual Reality Modeling Language » et soit « VRML » en abrégé), donc augmenter la puissance et richesse des applications utilisant du VRML.

Le document intitulé « A scalable architecture for the HTML5/X3D intégration model X3DOM », par J. BEHR et AL, publié dans Proceedings of the 15th International Conférence on Web 3D Technology 2010, ACM, New York, NY, USA, 24-25 July 2010, pp. 185-194, DOI : 10.1145/1836049.1836077, décrit une architecture évolutive permettant d'intégrer et de mettre à jour le contenu déclaratif X3D directement dans l'arborescence HTML DOM.

### Exposé de l'invention

La présente invention a pour but de résoudre tout ou partie des inconvénients mentionnés ci-dessus sous la forme d'un procédé de communication d'informations à travers un réseau de télécommunication, le réseau de télécommunication comprenant au moins un serveur et au moins un terminal échangeant un ensemble de données ; ledit au moins un terminal étant configuré pour mettre en oeuvre un navigateur internet ; le procédé de communication utilisant le format de données JavaScript Object Notation, JSON, et étant exécuté par le navigateur internet et comprenant une étape d'analyse dudit ensemble de données ; l' ensemble de données étant constitué d'au moins un élément parmi : un élément objet, un élément branche et un élément afficheur ;
- l'élément objet étant configuré pour être unique lorsque qu'il est généré, et étant un attribut qui permet d'associer un contenu informationnel à un objet dynamique ;
- l'élément branche étant configuré pour comprendre au moins un élément branche auxiliaire et/ou au moins un élément branche terminale ; et,
- l'élément afficheur étant un programme configuré pour créer une représentation
graphique, le procédé de communication comprenant en outre une étape de génération d'un langage de balisage HTML à partir dudit ensemble de données par le navigateur internet pour représenter au moins une page web.

Ainsi, grâce à cette disposition, le procédé de communication permet de faire une complète abstraction des trois langages. Le procédé de communication permet de réaliser le rendu de la page localement, sur le navigateur internet, par le navigateur internet, au lieu de le faire faire par des serveurs distants. Elle permet entre autre l'édition de la page en mode WYSIWYG. Le procédé de communication propose un format dynamique et extensible de description de page web. Il permet de faire abstraction de la couche technique définie par le 3WC, complexe à maîtriser et à mettre en oeuvre. Le procédé de communication réunit donc la richesse et la puissance du triptyque CSS/HTML/Javascript.

Selon un mode de réalisation, ledit ensemble de données est reçu par ledit au moins un terminal en provenance dudit serveur.

Ainsi, grâce à cette disposition, une page web moderne peut être décrite de façon autonome, modulaire et portable, de sorte à permettre sa génération dans les trois langages compréhensibles par le navigateur : CSS, HTML et Javascript. De plus, dans un schéma classique, cet ensemble de données doit être préalablement assemblées dans un ordre et une hiérarchie bien précis par le serveur avant d'être envoyées aux navigateurs web pour affichage. Grâce à ce procédé, cela n'est plus nécessaire.

Selon un mode de réalisation, le procédé de communication comprend une étape de formation d'un arbre à partir dudit ensemble de données.

Selon un mode de réalisation, ledit au moins un élément branche auxiliaire est configuré pour comprendre ledit au moins un élément branche terminale.

Selon un mode de réalisation, l'étape de formation dudit arbre comprend une étape d'exécution de l'élément afficheur.

Selon un mode de réalisation, l'étape de formation d'un arbre comprend une étape d'exécution de l'élément objet.

D'autres caractéristiques et avantages de l'invention apparaîtront mieux à la lecture de la description qui suit d'un mode de réalisation de l'invention donné à titre d'exemple non limitatif.

### Liste des figures

L'invention sera mieux comprise à l'aide de la description détaillée qui est exposée ci-dessous en regard du dessin, dans lesquels :
- la figure 1 représente un exemple d'architecture d'un réseau de télécommunication dans lequel le procédé selon l'invention est mis en oeuvre ;
- la figure 2 montre un exemple d'ordinogramme montrant les étapes du procédé de communication d'information selon l'invention est mis en oeuvre ; et,
- les figures 3A-3D illustrent un exemple d'ensemble de données et de génération d'un langage de balisage HTML **S760** par le navigateur internet selon un mode de réalisation.

Dans la description détaillée qui va suivre des figures définies ci-dessus, les mêmes éléments ou les éléments remplissant des fonctions identiques pourront conserver les mêmes références de manière à simplifier la compréhension de l'invention.

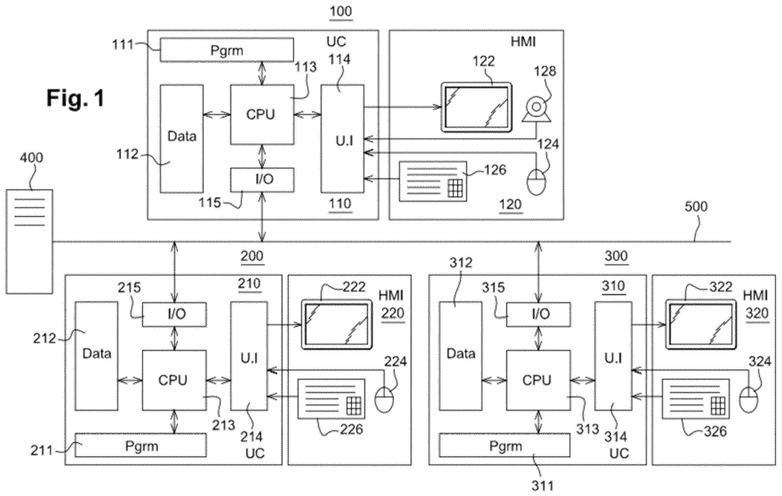

Selon un mode de réalisation représenté à la figure 1, le réseau de télécommunication **500** peut être un réseau de liaison de télécommunication classique, dit avec fil, par exemple des routeurs, modems et/ou commutateur ou sans fil par exemple un réseau Wi-Fi^{™} et/ou un réseau GSM^{™}. Le réseau de télécommunication peut être un réseau local, intranet et/ou internet configuré de sorte à ce que des messages puissent être transmis à au moins deux terminaux connectés au réseau de télécommunication, au travers de multiples liaisons et/ou noeuds de liaisons. Les terminaux **100, 200** et/ou **300** peuvent être de type identiques ou différents, ce sont typiquement des ordinateurs connectés à un réseau local, à un réseau intranet et/ou à un réseau de télécommunication **500,** des téléphones portables connectés et/ou des tablettes connectées à un réseau GSM^{™} et/ou à un réseau Wi-Fi^{™}, ou tout appareil de télécommunication connecté à un moyens d'interaction et possédant un moyen d'acquisition. La figure 1 présente un exemple de réseau avec un groupe de terminaux. De tels terminaux comportent au moins une unité centrale **110.** L'unité centrale **110** comprend au moins un module de programme **111,** un moyen de stockage **112** qui peut être matérialisé par un disque dur par exemple, un moyen de connexion **115** permettant la communication d'un terminal avec le réseau de télécommunication **500,** ce moyen de connexion est géré par un module de programme **111** stocké dans la mémoire de ce dernier.

Le terminal **100** possède un moyen d'interaction Homme/Machine **120** - en anglais « Human Machine Interface ». Les moyens d'interaction **120** peuvent comprendre par exemple un écran **122,** une souris **124,** un clavier **126** et/ou une caméra **128.** Pour des raisons de clarté, il est supposé que les terminaux **200** et 300 possèdent aussi des moyens d'interaction assez similaires dans leurs fonctions.

Le clavier **126** comporte des touches permettant d'introduire un message avec des caractères alphanumériques qui, sous la forme d'une chaîne de caractères, constituent un message. Le clavier **126** peut être déporté ou intégré dans le terminal et/ou dans les moyens d'interaction, c'est le cas par exemple si le terminal est un téléphone portable, de même le clavier **126** peut être tactile offrant ainsi la possibilité d'afficher des icônes directement sur l'écran **122** que l'utilisateur peut sélectionner avec l'aide d'actions tactiles directement sur les moyens d'interaction ou par l'intermédiaire d'une souris **124,** si cette dernière est disponible. La saisie d'un message peut être également effectuée à l'aide d'un système de reconnaissance vocale ou de reconnaissance de mouvement par l'intermédiaire d'une caméra **128** avec un micro intégré (non représenté). L'écran **122** peut aussi être déporté ou intégré dans le terminal. La gestion de l'écran **122,** de la souris, du clavier **126** et de la caméra 128 s'effectue par un gestionnaire de périphérique **114.**

Les moyens d'interaction en particulier l'écran permet d'afficher des messages provenant d'autres terminaux mais aussi des messages générés par le terminal lui-même comme par exemple des menus. Ces menus peuvent apparaître à l'écran ou dans une fenêtre occupant qu'une partie de l'écran. La génération des menus est intégrée dans le programme de messagerie que l'utilisateur sélectionne à l'aide d'un navigateur d'application. Le gestionnaire de périphérique 114 émet des signaux vidéo vers l'écran **122** et reçoit des données introduites par l'utilisateur sur le clavier **126.**

Le serveur 400 gère le réseau et établit des règles selon lesquelles les ordinateurs communiquent et coopèrent en permettant par exemple le partage et/ou l'échange d' ensemble de données **799** entre différent terminaux. Après avoir détaillé les différents composant d'un réseau de télécommunication, nous allons maintenant expliquer les étapes du procédé.

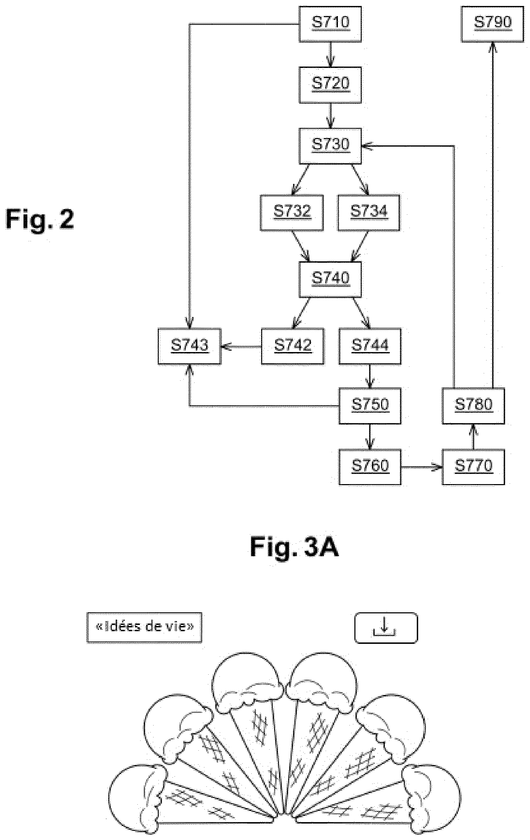

Le procédé de communication **5700** d'informations de la présente invention permet un échange d'ensemble de données **799** à travers un réseau de télécommunication **500,** comme cela est représenté sur la figure 2. Ce réseau de télécommunication **500** comprend au moins un serveur et au moins un terminal échangeant tous deux un ensemble de données **799.** Cet ensemble de données **799** l' ensemble de données **799** est constitué d'au moins un élément parmi : un élément objet **710,** un élément branche **720** et un élément afficheur **730.** Toutefois, l'ensemble de données **799** comprend obligatoirement l'élément objet **710,** alors que l'élément branche **720** et/ou l'élément afficheur **730** est optionnel ou peuvent être optionnels.

L'élément objet **710,** appelé également « kind », est configuré pour être unique lorsque qu'il est généré, c'est un attribut qui permet d'associer un contenu informationnel à un objet dynamique, c'est-à-dire un code en javascript conçu pour présenter le contenu de la façon dont on le souhaite. En effet, l'élément objet **710** est une chaîne de caractères unique dans l'espace de nommage du moteur de rendu.

En effet, lorsqu'on a un objet décrit comme :
- élément objet **710** : « note »
- contenu : « LETC »
- style :
   - couleur : « rouge »
   - taille de police : « 16px »

L'objet dynamique associé à l'élément objet **710** « note » affichera sur l'écran le texte « LETC » en rouge et de taille 16 pixels. Mais on peut tout aussi bien étendre ou surcharger cet objet dynamique pour qui fasse autrement, par exemple lancer une synthèse vocale sur le mot.

Selon un mode de réalisation, l'élément objet **710** crée un nouvel objet dynamique, par exemple :
- élément objet **710** : « jeux »
- contenu : « LETC »
- style :
   - couleur : « rouge »
   - taille de police : « 16px »

Et définir le comportement attendu via l'objet dynamique associé. Par exemple, souligner les palindromes possibles dans le texte.

Selon un autre exemple basé sur un plan de vol avion, l'élément objet **710,** bien qu'unique, peut permettre des interprétations différentes :
- élément objet **710** : « plot »
- appellation : « F-GAMA »
- Départ : « LFOX »
- Arrivée : « VDPP »

Dans cet exemple, l'ensemble de données est accessible à toute personne habilitée : la douane, les compagnies aériennes, les services d'alerte et de secours, l'armée, les services de contrôle aérien, etc.

C'est un même ensemble de données **799,** disponible sur une même infrastructure. Et pourtant, chaque métier a besoin de la traiter différemment, selon ses propres contraintes. Dans un schéma classique, il conviendrait de créer autant d'infrastructures que de métiers. Or, avec le procédé de communication 5700 de la présente demande, il suffit de créer l'objet dynamique attaché au métier.

L'élément branche **720,** quant à lui, est aussi appelé « kids » et est configuré pour comprendre au moins un élément branche auxiliaire **721** et au moins un élément branche terminale **722** ou au moins un élément branche terminale **722.** En effet, selon un mode de réalisation, l'élément branche auxiliaire **721** peut comprendre au moins un élément branche terminale **722** ou un autre élément branche auxiliaire **721** récursivement. Toutefois, un élément branche terminale **722** ne peut pas contenir d'autres éléments branches terminaux **722.**

Par ailleurs, l'un des avantages à ce procédé de communication **S700** est qu'il n'y a pas de limite au nombre d'élément objet **710** puisqu'ils sont uniques dans le même élément branche **720.**

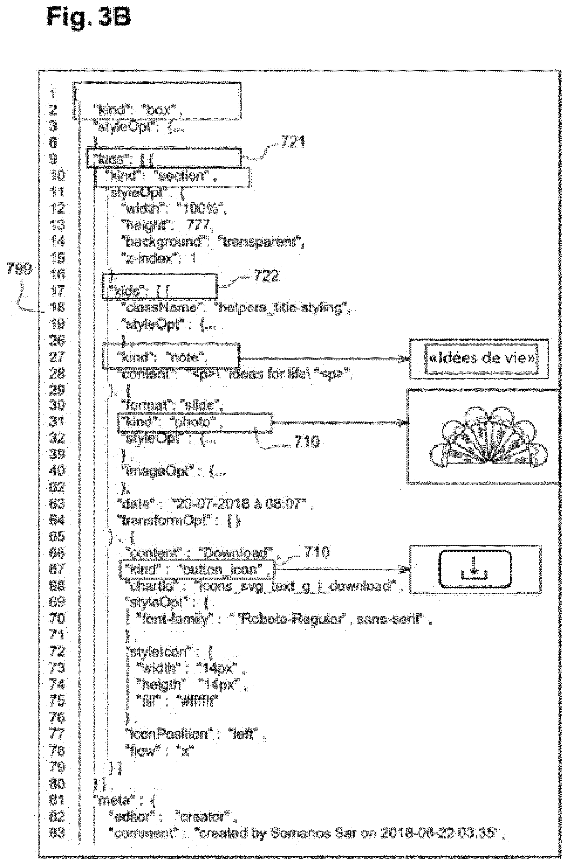

Dans l'exemple des figures 3A et 3B, l'ensemble de donnée est constitué d'un élément branche auxiliaire **721** de l'espèce « box » qui à son tour contient un autre élément branche auxiliaire **721** de l'espèce « section » lequel contient trois élément branche **720** terminaux, de trois espèces différentes : « note », « photo » et « bouton ».

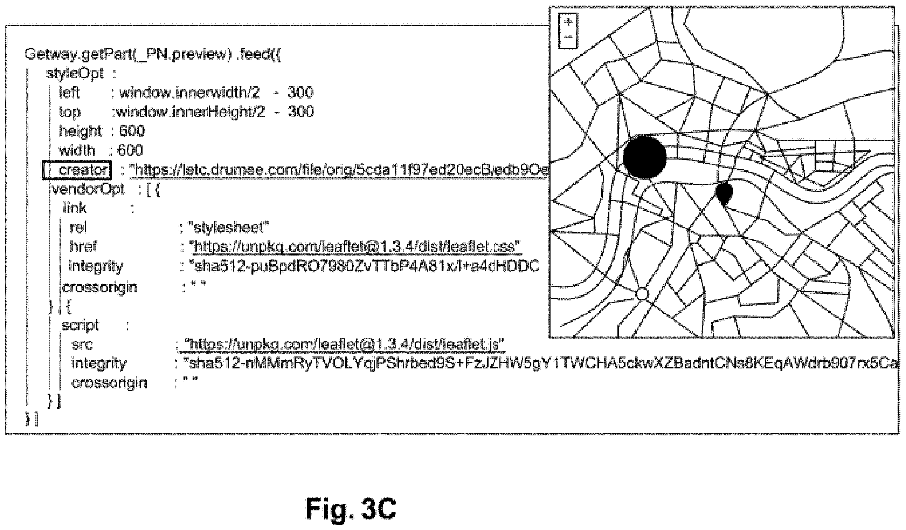

Les éléments afficheur **740,** aussi appelés « creator » et représentés à la figure 3C, de toutes ces espèces sont internes, c'est-à-dire que les codes capables de créer les graphiques sont déjà présents dans le dictionnaire de base du navigateur internet.

Le terminal est configuré pour exécuter un navigateur internet et le procédé de communication **S700,** quant à lui, est exécuté par le navigateur internet. Lorsque ce procédé de communication **5700** est exécuté, différentes étapes sont mises en oeuvre.

En général, les navigateurs web ne peuvent comprendre que les trois langages de base CSS, HTML et Javascript. Le procédé de communication **S700** de la présente invention permet de personnaliser, associer un type de contenu à un comportement spécifique et extensible.

En effet, le HTML n'est plus généré par le serveur mais localement, par le navigateur internet lui-même, via, en partie, par son moteur de rendu codé en Javascript.

L'une des étapes du procédé est l'étape d'analyse **S710** de l'ensemble de données **799.** À la suite de cette étape d'analyse **S710** de l'ensemble de données **799,** s'ensuit une étape de formation de l'arbre **S720** qui comprend une étape d'exécution de l'élément afficheur **S730** et/ou une étape d'exécution de l'élément objet **S740.**

Grâce à cette structure arborescente, il est donc possible d'agencer la présentation d'un contenu multimédia de la manière que l'on souhaite à partir de l'ensemble de données **799.**

Lors de cette étape d'exécution de l'élément afficheur **S730,** le procédé de communication vérifie si l'élément afficheur **730** peut être interne ou externe. Dans le cas d'un élément afficheur **730** externe, c'est-à-dire lors de l'étape d'exécution de l'élément afficheur externe **S734**, l'élément afficheur **730** doit préciser comment le moteur de rendu peut le trouver. Concrètement, ceci se fait grâce à la présence d'un schéma de localisation unifiée de ressource URL.

Lorsque l'élément afficheur **730** est interne, c'est-à-dire lors de l'étape d'exécution de l'élément afficheur interne **S732,** cela signifie que l'élément afficheur **730** ne contient aucune valeur. Dans ce cas, c'est le moteur de rendu qui peut, par exemple, trouver le code de l'élément afficheur **730** dans son dictionnaire de base, qui est une table associative reliant l'espèce de l'élément objet **710** au code de l'élément afficheur **730.**

Enfin, que ce soit lors de l'étape d'exécution de l'élément afficheur interne **S732** ou lors de l'étape d'exécution de l'élément afficheur externe **S734,** l'élément afficheur **730** est configuré pour créer une représentation graphique. En effet, un objet doit avoir un et un seul élément afficheur **730.** L'élément afficheur 730 est un petit programme dont le rôle est de créer une représentation visuelle de l'objet, dans la hiérarchie arborescente de la page.

Une fois l'élément afficheur trouvé et exécuté, suit une étape d'exécution de l'élément objet **S740,** dans laquelle le procédé de communication vérifie si l'élément objet **710** comprend un extrait de code, en anglais « snippet » qui sera exécuté.

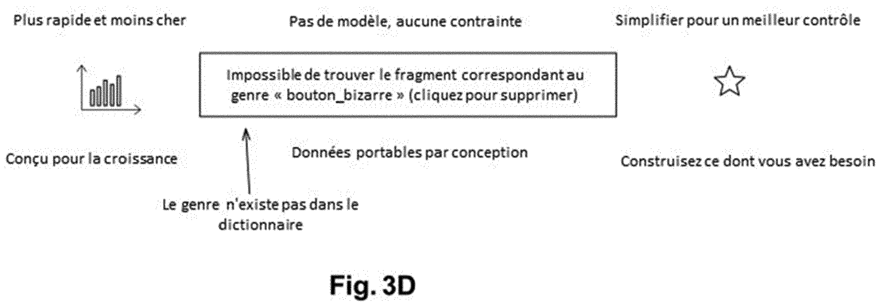

Dans le cas où l'élément objet **710** ne comprend pas d'extrait de code, comme sur la figure 3D, le procédé de communication reconnait l'absence de l'extrait de code lors d'une étape de reconnaissance l'absence de l'extrait de code **S742** est un message d'erreur sera généré lors d'une étape de génération de message d'erreur **S743.** Dans le cas contraire, si l'élément objet **710** comprend un extrait de code (non représenté), le procédé de communication garde en mémoire l'extrait de code lors d'une étape de sauvegarde de l'extrait de code de l'élément objet **S744** avant d'être exécuté lors d'une étape d'exécution de l'extrait de code **S750.**

Si l'étape d'exécution de l'extrait de code **S750** comporte des erreurs, un message d'erreur sera généré lors d'une étape de génération de message d'erreur **S743.** À l'inverse le procédé de communication **S700** exécutera une étape de génération d'un langage de balisage HTML **S760** par le navigateur internet pour représenter au moins un élément du DOM.

En effet, grâce à cette étape, le navigateur internet peut afficher du contenu décrit par le langage HTML en respectant sa position dans sa place dans l'arbre formé lors d'une étape d'insertion langage de balisage HTML **S770.**

En effet, les navigateurs internet sont basés sur le DOM et que celui-ci s'appuie sur du HTML, la génération du HTML est toujours faite du côté serveur mais jamais du coté utilisateur soit par le navigateur internet. Grâce à ce procédé de communication, le navigateur internet ne se contente plus de se connecter au serveur pour recevoir du HTML, avant de l'afficher, de la décorer avec du CSS et éventuellement de la rendre plus ou moins dynamique avec du code Javascript, puisqu'il est capable de générer par et pour lui-même le contenu désiré, spécifié par 710.

À la suite de cette étape d'insertion du langage de balisage HTML **S770,** le procédé de communication poursuit la lecture de l'arbre formé lors d'une étape de lecture **S780** qui renvoie soit vers l'étape d'exécution de l'élément afficheur **S730** soit termine le rendu de la page web en générant lors d'une étape de génération d'un message de rendu final **S790.**

Ainsi, grâce à cette disposition, le procédé de communication **S700** permet de lire un langage de description de page web qui permet de faire une complète abstraction des trois langages CSS/HTML/Javascript. Le procédé de communication **5700** permet également de réaliser le rendu de la page localement, sur le navigateur internet, par le navigateur internet, au lieu de le faire faire par des serveurs distants. Elle permet entre autre l'édition de la page en mode WYSIWYG. Le procédé de communication **5700** propose un format dynamique et extensible de description de page web. Il permet de faire abstraction de la couche technique définie par le 3WC, complexe à maîtriser et à mettre en oeuvre. Le procédé de communication **S700** réunit donc la richesse et la puissance du triptyque CSS/HTML/Javascript.

Par ailleurs, le procédé de communication **S700** utilise le format de données JSON. Ainsi, le volume de l'ensemble de données **799** à transférer est également réduit, comparé à un schéma où toute la page est transférée dans du HTML, ce qui permet également de réduire la consommation de la bande passante, d'une part.

En plus, par conception, l'ensemble des données 799 est entièrement sémantique, puisque la présence du dictionnaire permettre de savoir avec précision la nature de chaque objet défini par son attribut « kind », ainsi que ses autres attributs d'ordre qualificatifs (couleur, taille, etc.) ; descriptifs (commentaires, auteurs, lieu, etc.) ou autres méta données que le format JSON permet.

Basé sur le format JSON, le procédé de communication **S700** permet de lire un format dynamique et extensible de description de contenu multimédia. Il est particulièrement adapté dans l'édition de pages web en mode WYSIWYG, grâce à une architecture autodescriptive.

Le procédé de communication **S700** permet de faire une totale abstraction de la couche technique définie par le 3WC, très complexe à maîtriser et à mettre en oeuvre. Autrement dit, il combine la richesse et la puissance du triptyque CSS/HTML/Javascript aux avantages du JSON, compacte, léger, autonome, aussi bien compréhensible par les utilisateurs que par les machines. Cette combinaison permet de rendre les pages web « portables ».

En effet, une page web moderne est construite à l'aide des trois langages différents pour obtenir un document hiérarchique soit le langage HTML, décorative, le langage CSS et interactive, soit le langage Javascript. Ceci offre une puissance et une richesse de présentation. Seulement, le recours à trois langages différents pour atteindre cet objectif implique une mise en oeuvre très compliqué, surtout dès qu'il s'agit d'éditer de tel contenu en mode WYSIWYG, alors que le procédé de communication **S700** regroupe les trois langages dans un seul, tout en préservant le caractère sans limite de la combinaison des trois langages de base.

Enfin, un autre avantage du procédé de communication **S700** est une fluidité dans le partage de données, de sorte à les traiter en collaboration. En effet, avec un même ensemble de données **799,** il est possible d'associer plusieurs vues, chacune propre à un rôle particulier comme l'exemple qui a été donné pour le plan d'avion.

## Revendications

1. Procédé de communication (S700) d'informations à travers un réseau de télécommunication (S700), le réseau de télécommunication (500) comprenant au moins un serveur (400) et au moins un terminal (100, 200, 300) échangeant un ensemble de données (799) ; ledit au moins un terminal (100, 200, 300) étant configuré pour mettre en oeuvre un navigateur internet ; le procédé de communication (S700) utilisant le format de données JavaScript Object Notation, JSON, et étant exécuté par le navigateur internet et comprenant une étape d'analyse (S710) dudit ensemble de données (799) ; l' ensemble de données (799) étant constitué d'au moins un élément parmi : un élément objet (710), un élément branche (720) et un élément afficheur (730) ;
- l'élément objet (710) étant configuré pour être unique lorsque qu'il est généré, et étant un attribut qui permet d'associer un contenu informationnel à un objet dynamique ;
- l'élément branche (720) étant configuré pour comprendre au moins un élément branche auxiliaire (721) et/ou au moins un élément branche terminale (722) ; et,
- l'élément afficheur (730) étant un programme configuré pour créer une représentation graphique,
le procédé de communication comprenant en outre une étape de génération (S760) d'un langage de balisage HTML à partir dudit ensemble de données (799) par le navigateur internet pour représenter au moins une page web.

2. Procédé de communication (S700) selon la revendication 1, dans lequel ledit ensemble de données (799) est reçu par ledit au moins un terminal en provenance dudit serveur, lors d'une étape de réception (S702).

3. Procédé de communication (S700) selon l'une quelconque des revendications 1 à 2, lequel comprend une étape de formation d'un arbre (S720) à partir dudit ensemble de données (799).

4. Procédé de communication (S700) selon la revendication 3, dans lequel ledit au moins un élément branche auxiliaire (721) est configuré pour comprendre ledit au moins un élément branche terminale (722).

5. Procédé de communication (S700) selon la revendication 4 ou 5, dans lequel l'étape de formation dudit arbre (S720) comprend une étape d'exécution de l'élément afficheur (S730).

6. Procédé de communication (S700) selon l'une quelconque des revendications 3 à 5, dans lequel l'étape de formation dudit arbre (S720) comprend une étape d'exécution de l'élément objet (S740).

## Patentansprüche

1. Verfahren zur Kommunikation (S700) von Informationen über ein Telekommunikationsnetz (S700), wobei das Telekommunikationsnetz (500) mindestens einen Server (400) und mindestens ein Endgerät (100, 200, 300) umfasst, die einen Satz von Daten (799) austauschen; wobei das mindestens eine Endgerät (100, 200, 300) so konfiguriert ist, dass es einen Internetbrowser implementiert; wobei das Verfahren zur Kommunikation (S700) das Datenformat JavaScript Object Notation, JSON, verwendet und von dem Internetbrowser ausgeführt wird und einen Schritt zum Analysieren (S710) des Satzes von Daten (799) umfasst; wobei der Satz von Daten (799) aus mindestens einem der folgenden Elemente besteht: einem Objekt-Element (710), einem Zweig-Element (720) und einem Anzeige-Element (730);
- wobei das Objekt-Element (710) so konfiguriert ist, dass es eindeutig ist, wenn es erzeugt wird, und ein Attribut ist, das es ermöglicht, einem dynamischen Objekt einen Informationsinhalt zuzuordnen;
- wobei das Zweig-Element (720) so konfiguriert ist, dass es mindestens ein Hilfszweig-Element (721) und/oder mindestens ein Endzweig-Element (722) umfasst; und,
- wobei das Anzeige-Element (730) ein Programm ist, das so konfiguriert ist, dass es eine grafische Darstellung erzeugt,
wobei das Kommunikationsverfahren ferner einen Schritt des Erzeugens (S760) einer HTML-Auszeichnungssprache aus dem Satz von Daten (799) durch den Internetbrowser umfasst, um mindestens eine Webseite darzustellen.

2. Verfahren zur Kommunikation (S700) nach Anspruch 1, wobei der Satz von Daten (799) von dem mindestens einen Endgerät von dem Server in einem Empfangsschritt (S702) empfangen wird.

3. Verfahren zur Kommunikation (S700) nach einem der Ansprüche 1 bis 2, das einen Schritt des Bildens eines Baums (S720) aus dem Satz von Daten (799) umfasst.

4. Verfahren zur Kommunikation (S700) nach Anspruch 3, wobei das mindestens eine Hilfszweig-Element (721) so konfiguriert ist, dass es das mindestens eine Endzweig-Element (722) umfasst.

5. Verfahren zur Kommunikation (S700) nach Anspruch 4 oder 5, wobei der Schritt des Bildens des Baums (S720) einen Schritt des Ausführens des Anzeige-Elements (S730) umfasst.

6. Verfahren zur Kommunikation (S700) nach einem der Ansprüche 3 bis 5, wobei der Schritt des Bildens des Baums (S720) einen Schritt des Ausführens des Objekt-Elements (S740) umfasst.

## Claims

1. A method (S700) for communicating information through a telecommunication network (S700), the telecommunication network (500) comprising at least one server (400) and at least one terminal (100, 200, 300) exchanging a data set (799) ; said at least one terminal (100, 200, 300) being configured to implement an Internet browser ; the communication method (S700) using the data format JavaScript Object Notation, JSON, and being executed by the Internet browser and comprising a step (S710) of analyzing said data set (799); the data set (799) consisting of at least one element among: an object element (710), a branch element (720) and a display element (730);
- the object element (710) being configured to be unique when it is generated, and being an attribute that allows associating an informational content with a dynamic object;
- the branch element (720) being configured to comprise at least one auxiliary branch element (721) and/or at least one terminal branch element (722); and,
- the display element (730) being a program configured to create a graphic representation,
the communication method comprising a step (S760) of generating a markup language HTML from said data set (799) by the Internet browser to represent at least one Web page.

2. The communication method (S700) according to claim 1, wherein said data set (799) is received by said at least one terminal from said server, during a reception step (S702).

3. The communication method (S700) according to any one of claims 1 to 2, which comprises a step of forming a tree (S720) from said data set (799).

4. The communication method (S700) according to claim 3, wherein said at least one auxiliary branch element (721) is configured to comprise said at least one terminal branch element (722).

5. The communication method (S700) according to claim 4 or 5, wherein the step of forming said tree (S720) comprises a step of executing the display element (S730).

6. The communication method (S700) according to any one of claims 3 to 5, wherein the step of forming said tree (S720) comprises a step of executing the object element (S740).
